# EUROPÄISCHE PATENTSCHRIFT

(11) **EP 2 697 035 B1**
(45) Veröffentlichungstag und Bekanntmachung des Hinweises auf die Patenterteilung: **06.05.2015**
(21) Anmeldenummer: 12711778.6
(22) Anmeldetag: 22.03.2012
(51) Int. Cl.: B29C 49/04, B29C 49/80

(54) **VERFAHREN ZUR DETEKTION VON FEHLSTELLEN IN BLASFORMTEILEN**
METHOD FOR DETECTING FLAWS IN BLOW-MOLDED PARTS
PROCÉDÉ POUR DÉTECTER DES DÉFAUTS DANS DES PIÈCES MOULÉES PAR SOUFFLAGE

(30) Priorität: 11.04.2011 DE 102011016688
(43) Veröffentlichungstag der Anmeldung: 19.02.2014
(73) Patentinhaber: Rehau AG & Co, 95111 Rehau (DE)
(72) Erfinder: HÖLLERING, Jürgen, 95152 Selbitz (DE)
(86) Internationale Anmeldenummer: PCT/EP2012/001266
(87) Internationale Veröffentlichungsnummer: WO 2012/139705

(56) Entgegenhaltungen:
- JP-A- 54 159 470
- JP-A- 57 128 518
- US-A- 4 054 017
- US-A- 4 104 343

## Beschreibung

Die Erfindung betrifft ein Verfahren zur Detektion von Fehlstellen in Blasformteilen gemäß Oberbegriff des Anspruchs 1.

Die Herstellung von Kunststoff-Hohlkörpern mittels des Blasformverfahrens hat in der Praxis eine große Bedeutung, z.B. bei der Fertigung von Behältern, beispielsweise Flaschen, Kanistern, Fässern oder Tanks. Insbesondere wird das Verfahren auch zur Herstellung von Luft- und Wasserführungselementen, z.B. für Automobil-Anwendungen, eingesetzt. Beim Blasformen wird zunächst (kontinuierlich oder diskontinuierlich) ein Schlauch aus heißem, formbaren Kunststoff gefertigt, z.B. mittels eines Extrusionsprozesses. Anschließend fährt von oben oder unten ein Dorn in den Schlauch ein. Das zu diesem Zeitpunkt noch geöffnete zweigeteilte Blasformwerkzeug fährt daraufhin zu und umschließt den heißen, formbaren Schlauch mitsamt dem Dorn. Danach wird über den Dorn Druckluft in den Schlauch gepresst, wodurch dieser aufgeblasen und an die Kontur des Blasformwerkzeugs angepresst wird. Es folgt eine Abkühlung des geformten Blasformteils im Werkzeug bis zur Erreichung eines verfestigten Zustands. Als Kunststoffe kommen insbesondere Polyolefine, wie z.B. Polyethylen oder Polypropylen, zum Einsatz. Alternativ werden aber auch beispielsweise PMMA, Polycarbonat oder Polyamid verarbeitet.

Durch Variation der Materialstärke des Schlauchs lässt sich die Dicke des Kunststoffs im fertigen Blasformteil steuern. Zwecks Einsparung von Material und auch Gewicht besteht häufig das Bestreben, die Wandstärke des Blasformteils möglichst dünn auszuführen. Hierbei besteht jedoch die Gefahr der Bildung von Fehlstellen, insbesondere Löchern, im Blasformteil. Gemäß dem Stand der Technik müssen fehlerhafte Blasformteile mit Fehlstellen - insbesondere Löchern - in der Blasformwandung, mittels einer manuellen Inspektion durch einen Betriebsmitarbeiter identifiziert und aus dem Herstellungsprozess ausgeschleust werden. Die hierzu erforderliche Inaugenscheinnahme der hergestellten Blasformteile ist vergleichsweise aufwendig und verursacht somit hohe Personalkosten.

Ein Verfahren zur Detektion von Fehlstellen gemäß dem Oberbegriff des Anspruchs 1 ist aus den Druckschriften JP 57 128518 A, JP 54 159470 A und US 4 054 017 A bekannt. Bei dem durch diese Schriften dokumentierten Stand der Technik erfolgt eine rein qualitative Detektion von Fehlstellen in einem Blasformteil.

Der Erfindung liegt die Aufgabe zugrunde, ein Verfahren zur Detektion von Fehlstellen in Blasformteilen anzugeben, welches automatisch durchgeführt werden kann und daher kostengünstig ist.

Erfindungsgemäß wird die Aufgabe gelöst durch die Merkmale des Anspruchs 1.

Erfindungsgemäß wird also im Blasformwerkzeug die durch die Fehlstellen bedingte Leckageluft gemessen, die aus dem Blasformwerkzeug austritt. Im Blasformwerkzeug sind mehrere Öffnungen vorgesehen, durch die die Leckageluft hindurchströmt. Die Öffnungen können beispielsweise als Schlitzdüse ausgebildet sein. Gemäß einer bevorzugten Ausführungsform der Erfindung sind die Öffnungen gemeinsam an eine der jeweiligen Werkzeughälfte zugeordnete Sammelleitung angeschlossen. Die durch die Sammelleitung je Werkzeughälfte abgeführte Leckageluftmenge ist proportional zur Anzahl und Größe der Fehlstellen in der entsprechenden Blasformteilhälfte. Sofern kein Leckagevolumenstrom detektiert wird, liefert das erfindungsgemäße Fehlstellenerkennungsverfahren entsprechend die Aussage, dass keine Fehlstellen vorhanden sind. Über anhand von fehlerhaften Blasformteilen ermittelten Erfahrungswerten kann eine Korrelation zwischen dem gemessenen Leckageluftstrom und dem Ausmaß der Fehlstellen erstellt und z.B. digital gespeichert werden. So kann zum Beispiel auf einem Display der Blasformmaschine der Begriff "kleines Loch" angezeigt werden, sofern ein geringer Leckageluftstrom gemessen wird bzw. entsprechend die Anzeige "großes Loch" aufleuchtet, sofern eine große Leckageluftmenge detektiert wird. Da beide Werkzeughälften jeweils über eine separate Sammelleitung verfügen, ist die Anzeige der Fehlermeldung getrennt für Ober- und Unterseite des Blasformwerkzeugs möglich. Im Rahmen der Erfindung liegt es generell aber auch, dass für jede Öffnung separat die Messung einer Leckageluftmenge erfolgt, so dass zu jeder Öffnung eine Aussage über eine ggf. an dieser Stelle vorhandenen Fehlstelle getroffen werden kann.

### [hieran schließen die ursprünglichen Beschreibungsseiten 3 und 4 unverändert an]

Vorzugsweise erfolgt die Messung der Leckageluftmenge während der Kühlzeit des Blasformteils, also nach dessen Formgebung. Dies ist insbesondere deshalb zweckmäßig, da die während des Aufblasens des Schlauches zwischen Werkzeugwandung und Schlauch befindliche Luft auch über die entsprechenden Öffnungen abgezogen wird und diese abgezogene Luft natürlich nicht in Korrelation zu einer etwaigen Fehlstelle im Blasformteil steht.

Zweckmäßigerweise erfolgt die Messung der Lackageluftmenge über eine Volumenstrom- oder Differenzdruckmessung. Generell liegen indirekte Methoden zur Messung des durch die Leckage bedingten Volumenstroms im Rahmen der Erfindung, wie z.B. die Messung mittels eines Ultraschalldurchflusssensors, eines magnetisch induktiven Durchflusssensors, eines Wirbeldurchflussmessers, eines Drosselgerätes oder einer Strömungsmesssonde.

Gegenstand der Erfindung ist auch eine Vorrichtung zur Durchführung eines Verfahrens nach Anspruch 8.

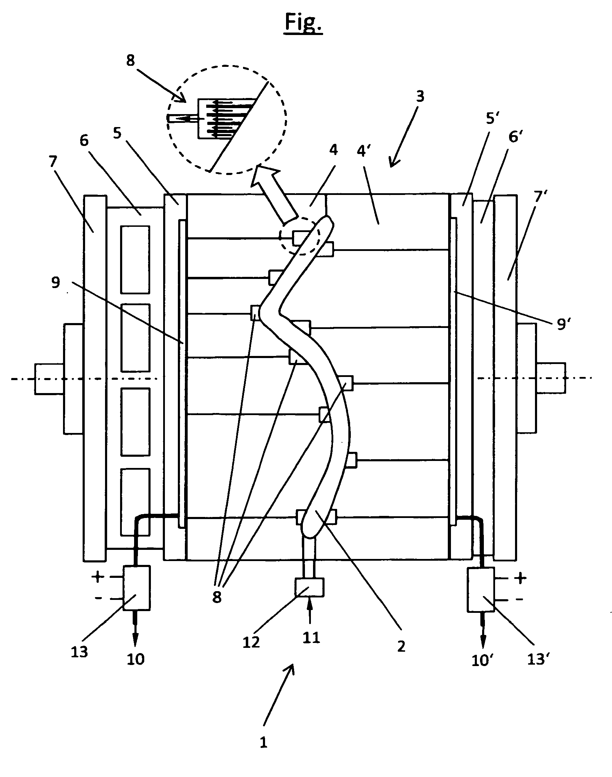

Im Folgenden wird die Erfindung anhand einer lediglich ein Ausführungsbeispiel darstellenden Zeichnung ausführlich erläutert. Die einzige Figur zeigt schematisch einen Querschnitt durch eine Blasformmaschine, die zur Durchführung des erfindungsgemäßen Verfahrens geeignet ist.

Die in der Figur dargestellte Blasformmaschine 1 weist ein mit einem Blasformteil 2 aus thermoplastischem Kunstsoff - z.B. einem Fluidführungselement für ein Automobil - bestücktes Werkzeug 3 auf, welches in zwei Werkzeughälften 4, 4' unterteilt ist. Beidseits der Werkzeughälften 4, 4' schließt sich jeweils eine Sammelplatte 5, 5' an. Weitere Bestandteile der in der Figur dargestellten Vorrichtung sind der/die pro Werkzeughälfte 4, 4' jeweils vorgesehene Unterbau 6, 6' / Maschinenplatte 7, 7'.

Der Figur ist zu entnehmen, dass beide Werkzeughälften 4, 4' jeweils an unterschiedlichen, voneinander beabstandeten Stellen des Blasformteiles 2 Öffnungen 8 in Form von Schlitzdüsen (siehe vergrößerte Darstellung) aufweisen. Diese Öffnungen 8 sind jeweils gemeinsam an eine der jeweiligen Werkzeughälfte 4, 4' zugeordneten Sammelleitung 9, 9' angeschlossen. Die Sammelleitungen 9, 9' sind hierbei jeweils als Längsnut der jeweiligen Sammelplatte 5, 5' ausgebildet.

Beim erfindungsgemäßen Verfahren zur Detektion von Fehlstellen, insbesondere Löchern, im Blasformteil 2 erfolgt während der Herstellung des Blasformteils 2 im Blasformwerkzeug 3 die Messung einer Leckageluftmenge 10, 10' jeweils in beiden Werkzeughälften 4, 4'. Beim Durchströmen des/der Fehlstelle/n stellt sich die Leckageluftmenge 10, 10' aufgrund des vorliegenden Blasformüberdrucks ein, welcher durch das Einleiten von Luft 11 über einen Blasdorn 12 der Blasformmaschine 1 in das Blasformteil aufgebracht wird. Über die jeweils gemessene Leckageluftmenge 10, 10' erfolgt nun ein Rückschluss auf das Vorliegen von Fehlstellen im Blasformteil 2, so dass dieser Vorgang nunmehr automatisch erfolgt. In der Blasformmaschine 1 ist eine Korrelation zwischen der gemessenen Leckageluftmenge 10, 10' und dem Ausmaß der Fehlstellen digital hinterlegt. Sofern die Messung einer geringen Leckageluftmenge 10, 10' erfolgt, wird auf einem einem (nicht dargestellten) Display der Blasformmaschine 1 der Begriff "kleines Loch" angezeigt. Bei einer großen detektierten Leckageluftmenge 10, 10' leuchtet entsprechend die Anzeige "großes Loch" auf. Da beide Werkzeughälften 4, 4' jeweils über eine separate Sammelleitung 9, 9' verfügen, erfolgt die Anzeige der Fehlermeldung für Werkzeughälften 4, 4' getrennt.

Die Messung der Leckageluftmenge 10, 10' erfolgt während der Kühlzeit des Blasformteils 2, also nach dessen Formgebung. Die Messung der Leckageluftmenge 10, 10' geschieht mittels Erfassung eines Differenzdrucks, welcher in eine Spannung als Ausgabewert des jeweiligen Messgerätes 13, 13' umgewandelt wird, oder alternativ über eine direkte Volumenstrommessung.

## Patentansprüche

1. Verfahren zur Detektion von Fehlstellen, insbesondere Löchern, in Blasformteilen,
- wobei während der Herstellung des Blasformteils (2) im Blasformwerkzeug (3) die Messung einer Leckageluftmenge (10, 10') erfolgt, die sich aufgrund des vorliegenden Blasformüberdrucks beim Durchströmen des/der Fehlstelle/n einstellt, und
- wobei über die Leckageluftmenge (10, 10') ein Rückschluss auf das Vorliegen von Fehlstellen im Blasformteil (2) erfolgt,
**dadurch gekennzeichnet, dass** im Blasformwerkzeug (3) an unterschiedlichen, voneinander beabstandeten Stellen des Blasformteils (2) Öffnungen vorgesehen sind, durch die die Leckageluft hindurchströmt, und dass über die Leckageluftmenge (10, 10') ein Rückschluss auf die Größe und/oder die Anzahl der Fehlstellen erfolgt.

2. Verfahren nach Anspruch 1, **dadurch gekennzeichnet, dass** die Öffnungen (8) als Schlitzdüsen ausgebildet sind.

3. Verfahren nach Anspruch 1 oder 2, **dadurch gekennzeichnet, dass** die Öffnungen (8) gemeinsam an eine der jeweiligen Werkzeughälfte (4, 4') zugeordnete Sammelleitung (9, 9') angeschlossen ist.

4. Verfahren nach einem der Ansprüche 1 - 3, **dadurch gekennzeichnet, dass** die Messung der Leckageluftmenge (10, 10') während der Kühlzeit des Blasformteils (2) nach dessen Formgebung erfolgt.

5. Verfahren nach einem der Ansprüche 1 - 4, **dadurch gekennzeichnet, dass** die Messung der Leckageluftmenge (10, 10') über eine Differenzdruckmessung erfolgt.

## Claims

1. Process for the detection of defects, in particular holes, in blow mouldings,
- wherein, during the production of the blow moulding (2) in the blow mould (3), a leakage-air quantity (10, 10'), which forms on account of the excess blow moulding pressure present upon flow through the defect(s), is measured, and
- wherein, using the leakage-air quantity (10, 10'), a conclusion is drawn as to the presence of defects in the blow moulding (2),
**characterized in that** openings, through which the leakage air flows, are provided in the blow mould (3) at different locations spaced apart on the blow moulding (2), and **in that**, using the leakage-air quantity (10, 10'), a conclusion is drawn as to the size and/or the number of the defects.

2. Process according to Claim 1, **characterized in that** the openings (8) are in the form of slot dies.

3. Process according to Claim 1 or 2, **characterized in that** the openings (8) are connected jointly to a collection line (9, 9') assigned to the respective mould half (4, 4').

4. Process according to one of Claims 1-3, **characterized in that** the leakage-air quantity (10, 10') is measured during the cooling time of the blow moulding (2) after it has been shaped.

5. Process according to one of Claims 1-4, **characterized in that** the leakage-air quantity (10, 10') is measured by way of a differential pressure measurement.

## Revendications

1. Procédé de détection de défauts, en particulier de trous, dans des pièces moulées par soufflage,
- la mesure d'une quantité d'air de fuite (10, 10') ayant lieu pendant la production de la pièce moulée par soufflage (2) dans l'outil de moulage par soufflage (3), laquelle quantité d'air de fuite se forme en raison de la surpression de moulage par soufflage présente lors de l'écoulement à travers le/les défaut(s), et
- une conclusion étant tirée quant à la présence de défauts dans la pièce moulée par soufflage (2) par le biais de la quantité d'air de fuite (10, 10'),
**caractérisé en ce que** des ouvertures à travers lesquelles l'air de fuite s'écoule sont prévues dans l'outil de moulage par soufflage (3) en différents points, espacés les uns des autres, de la pièce moulée par soufflage (2), et **en ce qu'**une conclusion quant à la taille et/ou au nombre des défauts est tirée par le biais de la quantité d'air de fuite (10, 10').

2. Procédé selon la revendication 1, **caractérisé en ce que** les ouvertures (8) sont réalisées sous forme de buses à fentes.

3. Procédé selon la revendication 1 ou 2, **caractérisé en ce que** les ouvertures (8) sont raccordées en commun à une conduite collectrice (9, 9') associée à la moitié d'outil (4, 4') respective.

4. Procédé selon l'une quelconque des revendications 1 à 3, **caractérisé en ce que** la mesure de la quantité d'air de fuite (10, 10') a lieu pendant le temps de refroidissement de la pièce moulée par soufflage (2) après son façonnage.

5. Procédé selon l'une quelconque des revendications 1 à 4, **caractérisé en ce que** la mesure de la quantité d'air de fuite (10, 10') a lieu par le biais d'une mesure de pression différentielle.
